# EUROPÄISCHE PATENTSCHRIFT

(11) **EP 1 837 547 B1**
(45) Veröffentlichungstag und Bekanntmachung des Hinweises auf die Patenterteilung: **15.04.2009**
(21) Anmeldenummer: 07002782.6
(22) Anmeldetag: 09.02.2007
(51) Int. Cl.: F16F 1/393

(54) **Elastisches Gelenklager**
Elastic pivot bearing
Articulation élastique

(30) Priorität: 21.02.2006 DE 102006007997
(43) Veröffentlichungstag der Anmeldung: 26.09.2007
(73) Patentinhaber: Jörn GmbH, 71336 Waiblingen (DE)
(72) Erfinder: Zawadzki, Bernd, 71409 Schwaikheim (DE)
(74) Vertreter: Liebl, Thomas

(56) Entgegenhaltungen:
- EP-A2- 0 819 556
- DE-A1- 2 410 032

## Beschreibung

Die Erfindung betrifft ein elastisches Gelenklager nach dem Oberbegriff des Anspruchs 1.

Ein bekanntes gattungsgemäßes elastisches Gelenklager (EP 0 819 556 A2) besteht aus einem Elastomer-Metallteil und aus einem metallischen Lagergehäuse in dem das Elastomer-Metallteil aufgenommen ist. Das Elastomermetallteil besteht seinerseits aus einem balligen Lagerinnenteil als erstem Lagerteil mit wenigstens einem in Richtung einer Lagerachse ausgerichteten Lageranschlusselement und aus wenigstens einem Elastomerkörper auf dem Lagerinnenteil der den balligen Bereich des Lagerinnenteils umgreift. Weiter sind zwei, jeweils seitlich in Richtung der Lagerachse gegenüberliegende und am Elastomerkörper angehaftete Stützringe vorgesehen, die den Elastomerkörper in Richtung zur axialen Lagermitte hin zumindest teilweise übergreifen. Das Elastomer-Metallteil ist in das Lagergehäuse mit einer Vorspannung im Elastomerkörper eingesetzt, wobei die Stützringe durch Verkleinerung ihres axialen Abstands axial zusammengespannt und in dieser Position axial abgestützt sind.

Konkret ist hier das Lagergehäuse als zylindrisches rohrförmiges Aufnahmeauge ausgebildet. Die Stützringe sind stabil und dickwandig aus Metall hergestellt mit einem kreisrunden Außendurchmesser entsprechend dem Zylinderdurchmesser des Aufnahmeauges. Der Innendurchmesser der Stützringe ist größer als der Durchmesser des benachbarten Lagerinnenteilbereichs, so dass hier ein ggf. teilweise mit verdrängtem Elastomermaterial ausgefüllter Ringspalt für einen Einfederweg verbleibt. Die axiale Abstützung der Stützringe in der vorgespannten Position des Elastomermaterials erfolgt durch jeweils einen am zugeordneten Stützring anliegenden Seegerring, der in eine Ringnut im Aufnahmeauge eingreift. Als Lageranschlusselemente sind am Lagerinnenteil beidseitig in Lagerachsrichtung ausgerichtete Anschlusspratzen vorgesehen. Die ballige Gestalt wird hier durch eine in der axialen Lagermitte angeordnete scheibenförmige Durchmesservergrößerung mit seitlichen Abrundungen zu beidseitigen Zylinderbereichen ausgebildet und der Elastomerkörper ist hier konkret eine umlaufende Elastomerschicht, die den balligen Bereich übergreift.

Zur Aufbringung der erforderlichen Vorspannung in der Elastomerschicht werden die beiden stabilen Stützringe axial zusammengespannt, wodurch sich durch Verdrängung von Elastomermaterial, die Vorspannung auch in von den Stützringen entfernteren Bereichen aufbaut. Der Außenumfang der Elastomerschicht ist hier zur axialen Mitte hin doppelkonusförmig ausgeführt, wodurch sich im vorgespannten Zustand im Aufnahmeauge anliegende umlaufende Wülste in den Lagerseitenbereichen ergeben, die bei geringen radialen Einfederungen die Abstützfunktion übernehmen. Bei größeren radialen Einfederungen wird hier der Doppelkonusbereich für die Abstützung hinzugezogen, so dass sich eine progressiv ansteigende Federerkennung ergibt.

Aufgabe der Erfindung ist es, ein gattungsgemäßes elastisches Gelenklager so weiterzubilden, dass bei einem einfachen und kostengünstigen Aufbau zusätzlich zu einer axialen Vorspannung auch eine radiale Vorspannung im Elastomerkörper aufbringbar ist.

Diese Aufgabe wird mit den Merkmalen des Anspruchs 1 gelöst.

Gemäß Anspruch 1 sind die zwei Stützringe als verformbare Kunststoff-Stützringe ausgebildet, die im Herstellzustand des Elastomer-Metallteils ein Übermaß im Durchmesser gegenüber dem zugeordneten Durchmesser des Lagergehäuses aufweisen. Im fertig montierten Zustand des elastischen Gelenks ist das Elastomer-Metallteil mit seinen Kunststoff-Stützringen in das Lagergehäuse eingepresst, wobei die Kunststoff-Stützringe mit einer an den Innendurchmesser des Lagergehäuses angepassten Durchmesserverkleinerung eingepresst sind. Dabei soll nach wie vor ein radial innerer Ringspalt zum benachbarten Bereich des Lagerinnenteils verbleiben um für die elastische Bewegung einen Lagerweg zur Verfügung zu stellen.

Die Durchmesserverkleinerung beim Einpressen der Kunststoffstützringe setzt sich im verformbaren Kunststoff insgesamt auch in einer Durchmesserverkleinerung des Innendurchmessers der Kunststoffstützringe fort, so dass darüber zusätzlich zur axialen Vorspannung über die axiale Zusammenspannung noch eine radiale Vorspannung im Kunststoffkörper aufgebaut wird. Dies trägt zu einer Vergleichmäßigung und ggf. zu einer Erhöhung der Vorspannung insgesamt im Elastomermaterial bei, wodurch ein zusätzlicher Dimensionierungsfreiraum mit erweiterten Einsatzmöglichkeiten bei hoher Lebensdauer eines solchen Gelenklagers geschaffen ist.

Zur Aufbringung einer geeigneten radialen Vorspannung ist es nach Anspruch 2 vorteilhaft, wenn sich die beiden Kunststoff-Stützringe mit einer axialen Längserstreckung von beiden Seiten her und am Elastomerkörper angehaftet bis in den Bereich der axialen Lagermitte hin erstrecken, so dass damit nahezu über die gesamte Axialerstreckung des Elastomerkörpers bzw. einer Elastomerschicht eine radiale Vorspannung aufbringbar ist. Die beiden Kunststoffstützringe sollen sich dabei in der axialen Lagermitte allenfalls berühren, vorzugsweise soll aber zwischen den Kunststoffstützringen dort ein Abstand verbleiben.

ln einer einfach herstellbaren Lagerausführung weist nach Anspruch 3 das Lagergehäuse als Aufnahmeauge einen zylindrischen Innenraum auf. Bevorzugt ist auch das Lagerinnenteil rotationssymmetrisch ausgebildet und auf dem balligen Bereich des Lagerinnenteils ist als Elastomerkörper eine etwa gleich dicke Elastomerschicht aufgebracht. Dadurch haben die Kunststoff-Stützringe die Form von Kunststoff-Konusringen, die in einem Längsschnitt gesehen jeweils flach keilförmig mit den Keilspitzen bis in den Bereich der axialen Lagermitte verlaufen.

Grundsätzlich kann der Innenraum des Lagergehäuses aber auch abweichend von der zylindrischen Form, beispielsweise in einer Ovalform ausgeführt sein.

Um die Eigenschaften eines Kugelgelenks zu erhalten, wird mit Anspruch 4 vorgeschlagen, den balligen Bereich des Lagerinnenteils kugelig auszuführen. Je nach den Gegebenheiten und den konkreten Einsatzfällen kann auch eine andere ballige, vorzugsweise rotationssymmetrische Form, beispielsweise eine gegenüber einer reinen Kugelform langgestrecktere Gestalt, insbesondere eine elliptische Form oder eine mittlere Zylinderform mit beidseitigen Halbkugelformen oder alternativ eine gestauchte scheibenförmige Gestalt gewählt werden.

In einer besonders bevorzugten Weiterbildung nach Anspruch 5 ist der gesamte Stirnseitenbereich der Kunststoff-Stützringe jeweils abgedeckt und am Lagergehäuse direkt oder indirekt axial zur Lageraußenseite hin abgestützt. Dadurch wird sicher ein gegebenenfalls mögliches seitliches Wegfließen des Kunststoffmaterials, welches auch erst im Laufe einer längeren Betriebszeit erfolgen könnte, sicher verhindert. Ein seitliches Wegfließen des Kunststoffmaterials würde zu einer ungünstigen Verringerung der Vorspannung im Elastomermaterial führen.

Konkret wird mit Anspruch 6 für ein solche Abdeckung und Abstützung vorgeschlagen, einen seitlichen Stirnringanschlag am Lagergehäuse auszubilden. Ein solcher Stirnringanschlag kann bereits an einer Seite des Lagergehäuses vor dem Einsetzen des Elastomer-Metallteils ausgebildet sein gegen dann das Elastomer-Metallteil mit dem dortigen Kunststoff-Stützring eingepresst wird. Zudem kann ein weiterer gegenüberliegender entsprechender Stirnringanschlag auch nach dem Einsetzen des Elastomer-Metallteils bei aufgebrachter axialer Vorspannung durch Umbördeln ausgebildet sein. Anstelle solcher seitlicher Stirnringanschläge kann beidseitig oder auch nur von einer Seite die Abdeckung und Abstützung durch eine entsprechend große Ringscheibe gebildet sein, die axial durch einen Seegerring in einer Nut im Lagergehäuse fixiert ist.

Für eine weitere Vergleichmäßigung der Gummivorspannung im Elastomermaterial und gegebenenfalls für eine Vergrößerung der Federsteifigkeit können nach Anspruch 7 in an sich bekannter Weise im Elastomerkörper oder in einer entsprechenden umlaufenden Elastomerschicht wenigstens ein Zwischenblech eingebettet sein.

Für eine einfache Lagerherstellung wird nach Anspruch 8 als Elastomermaterial zweckmäßig ein vulkaniserbares Gummimaterial gewählt.

Für eine unterschiedliche Federkennung in unterschiedlichen radialen Richtungen und/oder eine progressiv ansteigende Federkennung sind nach Anspruch 9 an einer umlaufenden Elastomerschicht zwischen den Kunststoffstützringen umfangsseitig und in Umfangsrichtung zumindest bereichsweise rinnenförmig eine oder mehrere axial nebeneinander liegende Ausnehmungen angebracht.

Die überlagerten axialen und radialen Vorspannungen im Elastomerkörper oder der Elastomerschicht können nach Anspruch 10 so dimensioniert werden, dass das Elastomer-Metallteil mit seiner Umfangsfläche bei üblichen Drehbelastungen reibschlüssig gehalten ist, wobei Lagerbewegungen molekular im Elastomermaterial aufgenommen werden. Bei größeren Drehbelastungen soll das Elastomer-Metallteil über einem bestimmten Losbrechmoment jedoch im Lagergehäuse durchrutschen. Die Gleitfläche am Elastomer-Metallteil wird hier vorteilhaft größtenteils durch das Kunststoffmaterial der Kunststoff-Stützringe gebildet, so dass das abriebgefährdete Elastomermaterial geschont wird.

Das Lagerinnenteil des elastischen Gelenklagers kann mit allen an sich bekannten Anschlusselementen ausgeführt sein. Insbesondere können nach Anspruch 11 am Lagerinnenteil einseitig oder beidseitig Anschlusszapfen oder Anschlusspratzen angebracht sein. Alternativ kann das Lagerinnenteil als Innenrohrteil mit einer Bohrung zur Aufnahme einer Anschlussverschraubung oder eines Konuszapfen ausgeführt sein.

Anhand einer Zeichnung wird die Erfindung näher erläutert.

Es zeigen:
- Fig. 1: einen Längsschnitt durch ein fertig montiertes elastisches Gelenklager, und
- Fig. 2: einen entsprechenden Längsschnitt durch ein Elastomer-Metallteil im Herstellzustand.

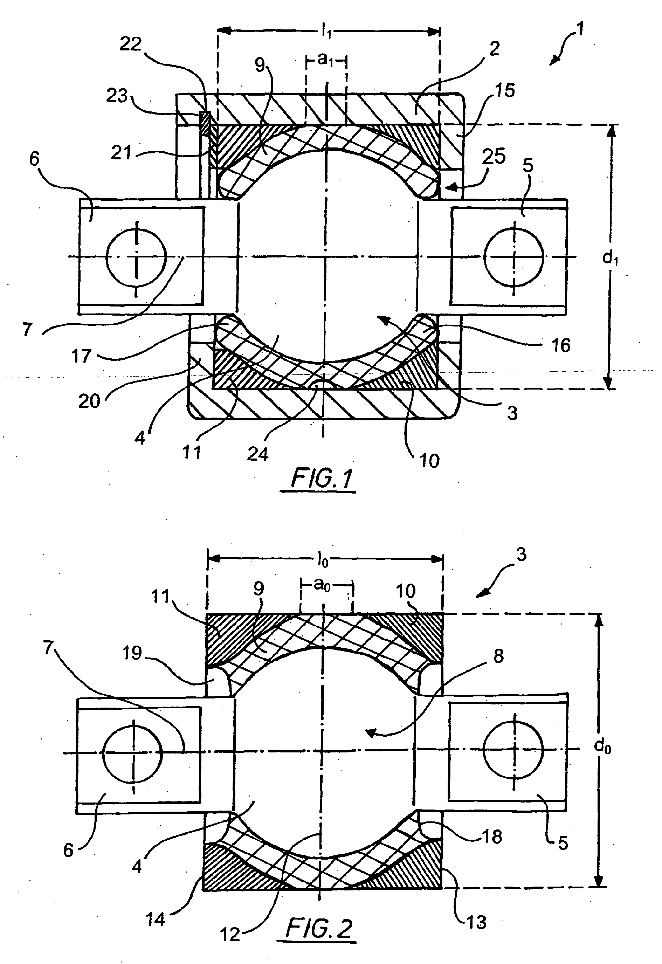

In Fig. 1 ist ein fertig montiertes elastisches Gelenklager 1 gezeigt mit einem metallischen Lagergehäuse als Aufnahmeauge 2 mit einem zylindrischen Innenraum. ln das Aufnahmeauge 2 ist ein Elastomer-Metallteil 3 eingesetzt.

Das Elastomer-Metallteil 3 ist in Fig. 2 im Herstellzustand gezeigt. Es besteht aus einem metallischen balligen Lagerinnenteil 4, wobei die ballige Gestalt als Kugelform 8 ausgebildet ist. Zu beiden Seiten dieser Kugelform 8 sind Anschlusspratzen 5, 6 angeformt, die sich in Richtung der Lagerachsen 7 erstrecken, wobei die Lagerachse 7 auch die Zylinderachse des Innenraums des Aufnahmeauges 2 ist.

Auf dem balligen Bereich bzw. der Kugelform 8 ist ein Elastomerkörper als umlaufende Gummischicht 9 mit etwa gleicher Dicke aufvulkanisiert.

Auf diese Gummischicht 9 sind Kunststoffstützringe als Kunststoff-Konusringe 10, 11 aufvulkanisiert. Die Kunststoff-Konusringe 10, 11 haben dabei eine zylindrische Außenfläche mit einem Durchmesser d₀. Die konische Innenfläche verläuft etwa flach keilförmig entsprechend der etwa gleichen Dicke der Gummischicht 9 mit der Keilspitze bis in den Bereich der axialen Lagermitte 12, wobei zwischen den Kunststoff-Konusringen 10, 11 ein Abstand a₀ verbleibt. Zu den beiden Außenseiten des Elastomer-Metallteils 3 hin liegen Stirnseitenbereiche der Kunststoff-Konusringe jeweils in einer Radialebene. Zudem verbleibt ein radial innerer Ringspalt 25 zum Bereich des benachbarten Lagerinnenteils 4.

Zum Erhalt des fertig montierten Gelenklagers 1 nach Fig. 1 wird das in Fig. 2 dargestellte Elastomer-Metallteil 3 in das Aufnahmeauge 2 eingesetzt, dessen Zylinderinnendurchmesser d₁ kleiner als der Außendurchmesser d₀ des Elastomer-Metallteils 3 bzw. der Kunststoff-Konusringe 10, 11 im Herstellzustand ist. Es ist daher erforderlich, das Elastomer-Metallteil 3 mit seinen Kunststoff-Konusringen 10, 11 in das Aufnahmeauge 2 unter Verkleinerung des Durchmessers d₀ mit einer Verformung des Kunststoffs der Kunststoff-Konusringe 10, 11 einzupressen, wodurch der Durchmesser der Kunststoff-Konusringe 10, 11 auch innen verkleinert und entsprechend eine radiale Vorspannung in der Gummischicht 9 aufgebaut wird.

Am Aufnahmeauge 2 ist von vorneherein (auf der rechten Seite) ein Stirnringanschlag 15 ausgebildet gegen den das Elastomer-Metallteil 3 mit dem Stirnseitenbereich 13 des Kunststoffkonusrings 10 gepresst wird. Der Stirnringanschlag 15 ist dabei ausgehend von der Umfangswand des Aufnahmeauges 2 so weit nach radial innen geführt, dass der gesamte Stirnseitenbereich 13 des Kunststoffkonusrings abgedeckt und abgestützt ist, so dass dadurch ein Wegfließen des Kunststoffmaterials axial nach außen unterbunden ist.

Das Elastomer-Metallteil 3 wird dann soweit eingepresst, dass die ursprüngliche axiale Länge lₒ zwischen den Stirnseiten der Kunststoff-Konusringe 10, 11 zur axialen Länge l₁ verkleinert wird, wodurch in der Gummischicht 9 eine axiale Vorspannung aufgebracht wird. Durch die Konusform der Kunststoffkonusringe 10, 11 und deren Keilwirkung wird zudem noch weiter die radiale Vorspannung erhöht. Ersichtlich wird dabei die Dicke der Gummischicht 9 gegenüber dem Herstellzustand durch Gummiverdrängung ebenfalls reduziert. Dadurch bilden sich zwischen den Kunststoffringen 10, 11 und dem benachbarten Bereich des Lagerinnenteils 4 Gummiausbauchungen 16, 17 an den Stirnseiten, welche im Herstellzustand (siehe Fig. 2) als Einbuchtungen 18, 19 ausgeführt waren. Durch das axiale Zusammenspannen der Kunststoff-Konusringe 10, 11 verringert sich auch deren unmittelbarer Abstand von ursprünglich a₀ zum kleineren Abstand a₁.

Zur Aufrechterhaltung der Vorspannung in der Gummischicht 9 ist es erforderlich den Kunststoff-Konusring 11 in dieser Position axial zu fixieren. Dazu sind in Fig. 1 zwei Möglichkeiten angegeben: Im unteren Bereich von Fig. 1 ist eine Ausführungsform gezeigt, bei der nach dem Einsetzen des Elastomer-Metallteils 3 in das Aufnahmeauge 2 im vorgespannten Zustand die Umfangswand des Aufnahmeauges 2 zu einem zweiten dem Stirnringanschlag 15 gegenüberliegenden Stirnringanschlag 20 umgebördelt ist.

lm oberen Teil von Fig. 1 ist dagegen eine Alternativmöglichkeit für eine axiale Abdeckung und Abstützung des Stirnseitenbereichs 14 des Kunststoff-Konusrings 11 gezeigt, wobei eine Ringscheibe 21 aufgesteckt ist, die durch eine an der Innenseite des Aufnahmeauges 2 umlaufende Nut 22 und einen darin eingesetzten Seegerring 23 gehalten ist.

Im unteren Bereich von Fig. 1 ist eine weitere Ausgestaltungsmöglichkeit angegeben, wobei umfangsseitig, hier in der axialen Längsmitte der Gummischicht 9, eine in Umfangsrichtung sektional verlaufende rinnenförmige Ausnehmung 24 angebracht ist, um in diesem Bereich und in dieser Radialrichtung die Federkennung gegenüber den anderen Bereichen bedarfsweise zu reduzieren.

Die durch die radiale und axiale Verspannung der Kunststoff-Konusringe 10, 11 in der Gummischicht 9 aufgebrachte Vorspannung kann so gewählt werden, dass zwischen Aufnahmeauge 2 und Elastomer-Metallteil 3 bei üblichen Betriebsbelastungen eine unverdrehbare Reibschlussverbindung besteht, die jedoch über einem vorbestimmten Losbrechmoment durchrutscht.

## Patentansprüche

1. Elastisches Gelenklager
mit einem Elastomer-Metallteil (3) bestehend
aus einem metallischen balligen Lagerinnenteil (4) als erstem Lagerteil mit wenigstens einem in Richtung einer Lagerachse (7) ausgerichtetes Lageranschlusselement (5, 6),
aus wenigstens einem Elastomerkörper (9) auf dem Lagerinnenteil (4), der den balligen Bereich (8) des Lagerinnenteils (4) umgreift,
aus zwei, jeweils seitlichen, in Richtung der Lagerachse (7) gegenüberliegenden und am Elastomerkörper (9) angehafteten Stützringen, die den Elastomerkörper (9) in Richtung zur axialen Lagermitte (12) hin teilweise übergreifen, und
mit einem metallischen Lagergehäuse (2) als zweitem Lagerteil, in das das Elastomer-Metallteil (3) mit einer Vorspannung im Elastomerkörper (9) eingesetzt ist, wobei die Stützringe durch Verkleinerung ihres axialen Abstands (I) axial zusammengespannt und in dieser Position axial abgestützt sind,
**dadurch gekennzeichnet,**
**dass** die zwei Stützringe als verformbare Kunststoff-Stützringe (10, 11) ausgebildet sind, die im Herstellungszustand des Elastomer-Metallteils (3) ein Übermaß im Durchmesser (d₀) gegenüber dem zugeordneten Durchmesser (d₁) des Lagergehäuses aufweisen und die im Lagergehäuse (2) durch Einpressen des Elastomer-Metallteils (3) und durch eine Verformung mit einer angepassten Durchmesserverkleinerung eingesetzt sind, wobei stirnseitig jeweils ein radial innerer Ringspalt zum benachbarten Bereich des Lagerinnenteils (4) verbleibt.

2. Elastisches Gelenklager nach Anspruch 1, **dadurch gekennzeichnet, dass** sich die beiden Kunststoff-Stützringe (10, 11) axial von beiden Seiten her und am Elastomerkörper (9) angehaftet, vorzugsweise anvulkanisiert bis in den Bereich der axialen Lagermitte (12) hin erstrecken, vorzugsweise im axial vorgespannten Zustand ohne sich zu berühren.

3. Elastisches Gelenklager nach Anspruch 1 oder 2, **dadurch gekennzeichnet, dass** das Lagergehäuse als Aufnahmeauge (2) einen zylindrischen Innenraum aufweist,
dass der Elastomerkörper als auf dem balligen Bereich (8) des Lagerinnenteils (4) als etwa gleich dicke Elastomerschicht (9) ausgebildet ist, und
dass die Kunststoff-Stützringe als Kunststoff-Konusringe (10, 11) ausgeführt sind, die in einem Längsschnitt gesehen jeweils flach keilförmig mit der Keilspitze bis in den Bereich der axialen Lagermitte (12) verlaufen.

4. Elastisches Gelenklager nach einem der Ansprüche 1 bis 3, **dadurch gekennzeichnet, dass** der ballige Bereich des Lagerinnenteils kugelig (8) ausgeführt ist.

5. Elastisches Gelenklager nach einem der Ansprüche 1 bis 4, **dadurch gekennzeichnet, dass** jeweils der gesamte Stirnseitenbereich (13, 14) der Kunststoff-Stützringe (10, 11) jeweils abgedeckt und am Lagergehäuse (2) direkt oder indirekt axial zur axialen Lageraußenseite hin abgestützt ist.

6. Elastisches Gelenklager nach Anspruch 5, **dadurch gekennzeichnet, dass** die Abdeckung und Abstützung durch einen seitlichen Stirnringanschlag (15) des Lagergehäuses (2) gebildet ist, der vor dem Einsetzen des Elastomer-Metallteils (3) gebildet ist und/oder durch einen Stirnringanschlag (20), der nach dem Einsetzen durch ein Umbördeln nach radial innen ausgebildet ist und/oder
dass die Abdeckung und Abstützung durch eine Ringscheibe (21) gebildet ist, die axial durch einen Seegering (23) in einer Nut (22) im Lagergehäuse (2) fixiert ist.

7. Elastisches Gelenklager nach einem der Ansprüche 1 bis 6, **dadurch gekennzeichnet, dass** in dem wenigstens einen Elastomerkörper oder in der umlaufenden Elastomerschicht (9) wenigstens ein Zwischenblech eingebettet ist.

8. Elastisches Gelenklager nach einem der Ansprüche 1 bis 7, **dadurch gekennzeichnet, dass** das Elastomermaterial des wenigstens einen Elastomerkörpers oder der Elastomerschicht (9) ein vulkanisierbares Gummimaterial ist.

9. Elastisches Gelenklager nach einem der Ansprüche 1 bis 8, **dadurch gekennzeichnet, dass** an einer umlaufenden Elastomerschicht (9) axial zwischen den Kunststoff-Stützringen (10, 11) umfangsseitig und in Umfangsrichtung bereichsweise rinnenförmig eine oder mehrere axial nebeneinanderliegende Ausnehmungen (24) angebracht sind.

10. Elastisches Gelenklager nach einem der Ansprüche 1 bis 9, **dadurch gekennzeichnet, dass** die axiale und radiale Vorspannung im Elastomerkörper oder der Elastomerschicht (9) so dimensioniert ist, dass das Elastomer-Metallteil (3) mit seiner Umfangsfläche an der Innenfläche des Lagergehäuses (2) über einem bestimmten Losbrechmoment durchrutscht.

11. Elastisches Gelenklager nach einem der Ansprüche 2 bis 10, **dadurch gekennzeichnet, dass** am Lagerinnenteil (4) einseitig oder beidseitig Anschlusszapfen oder Anschlusspratzen (5, 6) angebracht sind oder das Lagerinnenteil ein Innenrohrteil mit einer Bohrung zur Aufnahme einer Anschlussverschraubung oder eines Konuszapfens ist.

## Claims

1. Elastic pivot bearing with an elastomer-metal part (3), comprising
a metallic convex inner bearing part (4), as a first bearing part, with at least one bearing connection element (5, 6) aligned in the direction of a bearing axis (7),
at least one elastomer body (9) on the inner bearing part (4), which engages around the convex region (8) of the inner bearing part (4),
two, respectively lateral, supporting rings, lying opposite each other in the direction of the bearing axis (7) and adhesively attached to the elastomer body (9), which rings partially engage over the elastomer body (9) in the direction of the axial bearing centre (12), and
a metallic bearing housing (2) as a second bearing part, in which the elastomer-metal part (3) is fitted with prestress in the elastomer body (9), the supporting rings being axially clamped together by reducing the axial distance (I) between them and axially held in this position,
**characterized**
**in that** the two supporting rings are formed as deformable plastic supporting rings (10, 11), which in the state in which the elastomer-metal part (3) is produced have an oversize in the diameter (d₀) in comparison with the assigned diameter (d₁) of the bearing housing and which are fitted in the bearing housing (2) by pressing in of the elastomer-metal part (3) and by a deformation with an adapted diameter reduction, a radially inner annular gap with respect to the adjacent region of the inner bearing part (4) respectively remaining at the end faces.

2. Elastic pivot bearing according to Claim 1, **characterized in that** the two plastic supporting rings (10, 11) extend axially from both sides and, attached, preferably vulcanized, onto the elastomer body (9), reach into the region of the axial bearing centre (12), preferably without touching each other when in the axially prestressed state.

3. Elastic pivot bearing according to Claim 1 or 2, **characterized in that** the bearing housing has a cylindrical inner space as a receiving eye (2),
**in that** the elastomer body is formed as an elastomer layer (9) of approximately equal thickness on the convex region (8) of the inner bearing part (4), and
**in that** the plastic supporting rings are configured as plastic tapered rings (10, 11), which, seen in a longitudinal section, respectively run in a flat wedge-shaped manner, with the tip of the wedge extending into the region of the axial bearing centre (12).

4. Elastic pivot bearing according to one of Claims 1 to 3, **characterized in that** the convex region of the inner bearing part is spherically (8) configured.

5. Elastic pivot bearing according to one of Claims 1 to 4, **characterized in that** the entire end face region (13, 14) of the plastic supporting rings (10, 11) is respectively covered and directly or indirectly supported on the bearing housing (2) axially towards the axial outer side of the bearing.

6. Elastic pivot bearing according to Claim 5, **characterized in that** the covering and support is formed by a lateral end ring stop (15) of the bearing housing (2) which is formed before fitting the elastomer-metal part (3) and/or by an end ring stop (20) which is formed after fitting by flanging radially inwards and/or
**in that** the covering and support is formed by an annular disc (21), which is axially fixed by a circlip (23) in a groove (22) in the bearing housing (2).

7. Elastic pivot bearing according to one of Claims 1 to 6, **characterized in that** at least one intermediate plate is embedded in the at least one elastomer body or in the peripheral elastomer layer (9).

8. Elastic pivot bearing according to one of Claims 1 to 7, **characterized in that** the elastomer material of the at least one elastomer body or of the elastomer layer (9) is a vulcanizable rubber material.

9. Elastic pivot bearing according to one of Claims 1 to 8, **characterized in that** one or more recesses (24) lying axially next to one another are provided on a peripheral elastomer layer (9) axially between the plastic supporting rings (10, 11) circumferentially and in a channel-like manner in some regions in the circumferential direction.

10. Elastic pivot bearing according to one of Claims 1 to 9, **characterized in that** the axial and radial prestress in the elastomer body or the elastomer layer (9) is dimensioned such that the elastomer-metal part (3) slips through with its circumferential surface on the inner surface of the bearing housing (2) over a certain initial breakaway torque.

11. Elastic pivot bearing according to one of Claims 2 to 10, **characterized in that** connecting pins or connecting claws (5, 6) are provided on one or both sides of the inner bearing part (4), or the inner bearing part is an inner tube part with a bore for receiving a connection screw fitting or a tapered pin.

## Revendications

1. Articulation élastique
comportant une partie métal-élastomère (3) se composant
d'une partie de palier intérieur sphérique métallique (4) en tant que première partie de palier avec au moins un élément de raccordement de palier (5, 6) orienté en direction d'un axe de palier (7),
d'au moins un corps élastomère (9) sur la partie de palier intérieur (4), lequel entoure la zone sphérique (8) de la partie de palier intérieur (4),
de deux bagues d'appui respectivement latérales se faisant face dans la direction de l'axe de palier (7) et attachées au corps élastomère (9), lesquelles bagues d'appui recouvrent partiellement le corps élastomère (9) dans la direction du centre de palier axial (12), et
d'un logement de palier métallique (2) en tant que seconde partie de palier, dans lequel la partie métal-élastomère (3) est installée avec une précontrainte dans le corps élastomère (9), les bagues d'appui étant serrées de manière axiale par un rétrécissement de leur distance axiale (I) et étant en appui de manière axiale dans cette position,
**caractérisée en ce**
**que** les deux bagues d'appui sont réalisées comme des bagues d'appui en matière plastique (10, 11) déformables qui, à l'état de fabrication de la partie métal-élastomère (3), présentent une sur-dimension au niveau du diamètre (d₀) par rapport au diamètre (d₁) associé du logement de palier et qui sont installées dans le logement de palier (2) par une pression sur la partie métal-élastomère (3) et par une déformation à l'aide d'un rétrécissement de diamètre approprié, sachant qu'il reste côté frontal respectivement une fente annulaire radialement intérieure vers la zone adjacente de la partie de palier intérieur (4).

2. Articulation élastique selon la revendication 1, **caractérisée en ce que**, jusque dans la zone du centre de palier axial (12), les deux bagues d'appui en matière plastique (10, 11) s'étendent de manière axiale depuis les deux côtés et de manière attachée au corps élastomère (9), de préférence de façon vulcanisée, de préférence sans se toucher à l'état prétendu axialement.

3. Articulation élastique selon la revendication 1 ou 2, **caractérisée en ce que**, en tant qu'oeil de réception (2), le logement de palier comprend un espace intérieur cylindrique,
**en ce que** le corps élastomère est réalisé comme une couche élastomère (9) d'une épaisseur à peu près égale sur la zone sphérique (8) de la partie de palier intérieur (4), et
**en ce que** les bagues d'appui en matière plastique sont réalisées comme des bagues coniques en matière plastique (10, 11) qui, d'après une vue en coupe longitudinale, s'étendent respectivement de manière plane en forme de coin avec la pointe de coin allant jusque dans la zone du centre de palier axial (12).

4. Articulation élastique selon l'une quelconque des revendications 1 à 3, **caractérisée en ce que** la zone sphérique de la partie de palier intérieur est réalisée à la manière d'une sphère (8).

5. Articulation élastique selon l'une quelconque des revendications 1 à 4, **caractérisée en ce que** respectivement l'ensemble de la zone latérale frontale (13, 14) des bagues d'appui en matière plastique (10, 11) est respectivement recouvert et est en appui directement ou indirectement contre le logement de palier (2) de manière axiale vers le côté de palier extérieur axial.

6. Articulation élastique selon la revendication 5, **caractérisée en ce que** le recouvrement et l'appui sont formés par une butée annulaire frontale (15) latérale du logement de palier (2), laquelle est formée avant l'installation de la partie métal-élastomère (3) et/ou par une butée annulaire frontale (20) qui est réalisée après l'installation par le biais d'un bordage vers l'intérieur radialement et/ou
**en ce que** le recouvrement et l'appui sont formés par un disque annulaire (21) qui est fixé de manière axiale dans le logement de palier (2) au moyen d'un anneau de retenue (23) dans une rainure (22).

7. Articulation élastique selon l'une quelconque des revendications 1 à 6, **caractérisée en ce qu'**au moins une tôle intermédiaire est encastrée dans le au moins un corps élastomère ou dans la couche élastomère (9) périphérique.

8. Articulation élastique selon l'une quelconque des revendications 1 à 7, **caractérisée en ce que** le matériau élastomère de l'au moins un corps élastomère ou de la couche élastomère (9) est un matériau en caoutchouc pouvant être vulcanisé.

9. Articulation élastique selon l'une quelconque des revendications 1 à 8, **caractérisée en ce qu'**un ou plusieurs évidements (24) se situant les uns à côté des autres de manière axiale sont placés côté circonférentiel au niveau d'une couche élastomère (9) périphérique de manière axiale entre les bagues d'appui en matière plastique (10, 11) et pour partie de manière cannelée dans la direction de la circonférence.

10. Articulation élastique selon l'une quelconque des revendications 1 à 9, **caractérisée en ce que** la précontrainte axiale et radiale est dimensionnée dans le corps élastomère ou dans la couche élastomère (9) de telle manière qu'avec sa surface circonférentielle, la partie métal-élastomère (3) glisse sur la face interne du logement de palier (2) au-dessus d'un couple de démarrage défini.

11. Articulation élastique selon l'une quelconque des revendications 2 à 10, **caractérisée en ce que**, sur un côté ou sur les deux côtés, au niveau de la partie de palier intérieur (4), des broches de raccordement ou des pattes de raccordement (5, 6) sont placées ou bien que la partie de palier intérieur est une partie de tube intérieur pourvue d'un alésage servant à recevoir un raccord à visser ou une broche conique.
